# FASCICULE DE BREVET EUROPEEN

(11) **EP 4 680 482 B1**
(45) Date de publication et mention de la délivrance du brevet: **03.06.2026**
(21) Numéro de dépôt: 24721166.7
(22) Date de dépôt: 30.04.2024
(51) Int. Cl.: B60L 53/10, B60L 53/14, B60L 53/31, B60L 53/67

(54) **INSTALLATION DE RECHARGE POUR VÉHICULES ÉLECTRIQUES**
LADEEINRICHTUNG FÜR ELEKTROFAHRZEUGE
CHARGING FACILITY FOR ELECTRIC VEHICLES

(30) Priorité: 04.07.2023 FR 2307122
(43) Date de publication de la demande: 21.01.2026
(73) Titulaire: Socomec S.A., 67230 Benfeld (FR)
(72) Inventeur: DEPASSE, Frédéric, 67600 SELESTAT (FR); HERTZOG, Jérôme, 67870 GRIESHEIM-PRÈS-MOLSHEIM (FR); VERGER, Ludovic, 67230 HUTTENHEIM (FR)
(74) Mandataire: Ipsilon
(86) Numéro de dépôt international: PCT/EP2024/061838
(87) Numéro de publication internationale: WO 2025/008092

(56) Documents cités:
- WO-A1-2025/008092
- DE-T5- 112020 006 391
- US-A1- 2020 039 374

## Description

### Domaine technique

La présente invention est dans le domaine de la recharge de véhicules électriques. Elle concerne plus particulièrement une installation pour véhicules électriques permettant une recharge rapide, par courant continu, et une recharge lente, par courant alternatif. L'invention permet notamment de recharger un véhicule en mode rapide et/ou lent, sans déplacer le véhicule.

### Technique antérieure

Actuellement, de plus en plus de véhicules électriques sont commercialisés dans le monde et les décennies à venir vont voir la part de véhicule électriques croitre de manière significative. Un enjeu majeur de ce type de technologie de mobilité est la recharge des véhicules.

Le domaine de la recharge de voiture est très dynamique, et diverses solutions sont proposées. La tendance générale est de proposer des bornes de recharge lente en courant alternatif ayant des puissances inférieures à 12kW, et des bornes de recharge rapide en courant continu ayant des puissances supérieures à 25kW, jusqu'à 180kW, voire au-delà.

Afin de recharger un véhicule électrique, il est nécessaire d'alimenter sa batterie avec du courant continu. La recharge en courant alternatif est donc réalisée via un convertisseur alternatif/continu embarqué dans la voiture. Ce convertisseur bride la puissance de recharge, c'est pourquoi la recharge en courant alternatif est dite « lente ». L'avantage de ce type de recharge est que le réseau électrique délivre du courant alternatif, la recharge est donc disponible partout sur le réseau électrique, y compris au domicile du propriétaire du véhicule. C'est pourquoi toutes les voitures électriques actuelles proposent ce mode de recharge lente.

La recharge rapide en courant continu est encore optionnelle sur une part significative des modèles de voiture, et est réalisée par un convertisseur qui se trouve dans la borne de recharge, connecté directement à la batterie du véhicule électrique. Ce type de recharge a tendance à se développer, car il permet de réduire le temps de recharge, qui est un point faible des véhicules électriques par rapport aux véhicules thermiques, notamment lors des déplacements sur de longues distances. Cependant la recharge en courant continu, en raison de sa puissance généralement plus élevée, peut avoir comme inconvénient un vieillissement prématuré de la batterie sur certains véhicules.

En raison de leurs avantages respectifs, les recharges en courant alternatif et en courant continu ont donc vocation à coexister. L'usager du véhicule électrique, qu'il soit particulier ou professionnel, choisira suivant son besoin, l'un ou l'autre type de recharge.

Les chargeurs en courant continu sont aujourd'hui principalement installés sur des stations-service, afin de permettre aux usagers de se charger rapidement au cours d'un trajet longue distance. Le véhicule reste garé devant la borne, seulement pour le temps de la recharge. Les chargeurs en courant continu commencent néanmoins à se généraliser également sur des parkings à plus longue durée (magasins, parkings d'entreprises, voire même chez des particuliers). Les chargeurs de puissance en courant continu d'une puissance de 50 à 60kW présentent l'avantage de permettre une recharge rapide : par exemple, pour un véhicule type, de 20 à 80% de la capacité de sa batterie en moins d'une heure. L'inconvénient est que le coût d'une borne de recharge en courant continu étant élevé, le nombre de bornes est limité. Se pose alors le problème de la libération de la borne une fois la recharge réalisée, afin de permettre la recharge d'un autre véhicule. Ce point est un vrai frein à la généralisation de l'utilisation de la charge en courant continu rapide sur ce type de parking, le non-emploi de la borne de recharge rapide impactant directement son amortissement. Afin de résoudre ce problème, des incitations à libérer la borne sont mises en place, comme par exemple des frais facturés à l'usager en cas de non-utilisation de la borne. Ces incitations ne répondent pas au problème de manière satisfaisante.

Le document US2023/0067233 propose un dispositif de recharge de véhicules électriques proposant deux modes de charge : un mode de charge en courant continu, et un mode de charge en courant alternatif. Ce dispositif présente l'inconvénient de nécessiter l'usage de beaucoup de câbles, et qu'il est difficile de le faire évoluer dans le temps.

D'autres dispositifs de recharge sont connus de DE112020006391 T5 et US2020039374 A1

### Exposé de l'invention

La présente invention vise à pallier ces inconvénients en proposant une installation de recharge comportant des bornes alimentées chacune en courant alternatif, pour une charge lente, et en courant continu, pour une charge rapide, les ressources en courant alternatif et continu pouvant être gérées efficacement afin de gérer au mieux les besoins des véhicules électriques en recharge dans cette installation. Cette installation comporte au moins un bus de recharge rapide, ce qui lui confère des capacités importantes d'évolution et de modularité, minimisant sensiblement le cuivre nécessaire au câblage, permettant une réduction importante des coûts de l'installation.

Dans ce but, l'invention concerne une installation de recharge pour véhicules électriques, comportant :
- au moins une source de recharge rapide en courant continu,- au moins une source de recharge lente en courant alternatif,- au moins un contrôleur,- une pluralité de bornes de recharge,-au moins un premier bus de connexion reliant au moins une desdites au moins une source de recharge rapide à au moins deux bornes de recharge, le premier bus de connexion alimentant successivement lesdites au moins deux bornes de recharge, formant une topologie linéaire entre une première extrémité, qui est une source de recharge rapide, et une deuxième extrémité, qui est soit une borne de recharge, soit une source de recharge rapide,- au moins un dispositif de connexion reliant au moins une desdites au moins une source de recharge lente auxdites au moins deux bornes de recharge,chaque borne de recharge comportant un moyen de commutation piloté par ledit contrôleur, les entrées dudit moyen de commutation étant reliées audit au moins un premier bus et audit au moins un dispositif de connexion, et la sortie du moyen de commutation étant reliée à un moyen de branchement à un véhicule.

Grâce à ces dispositions, tout véhicule arrivant dans l'installation pour une recharge pourra se garer devant n'importe quelle borne de recharge, une pluralité de bornes fournissant les mêmes services de recharge lente et rapide, et ceci de manière sécurisée. Il est alors possible d'optimiser l'utilisation de la puissance disponible au niveau de l'installation, pour satisfaire au mieux les besoins des utilisateurs des véhicules. Ceci favorise une meilleure utilisation des ressources, notamment sur les parkings de stationnement longue durée, la source de recharge rapide pouvant être tour à tour utilisée par différentes bornes de recharge, et la recharge d'un véhicule pouvant être partiellement lente et rapide. De plus l'utilisation de bus de connexion permet de réduire la longueur totale de câbles conducteurs nécessaires pour réaliser l'invention, et permet donc une économie de matériau, par exemple de cuivre, ce qui fait baisser les coûts.

Ledit dispositif de connexion peut être au moins un second bus de connexion, ce qui permet de simplifier l'installation et de la rendre facilement modulable et évolutive.

Ledit moyen de branchement peut être un connecteur unique de branchement à un véhicule, ce qui permet de faciliter le branchement d'un véhicule à la borne de recharge en vue d'une recharge lente et/ou rapide.

Ledit contrôleur peut être disposé dans une unité centrale, ledit au moins un premier bus de connexion reliant chaque source de recharge rapide à au moins deux bornes de recharge en passant par ladite unité centrale, et ledit au moins un dispositif de connexion reliant chaque source de recharge lente auxdites au moins deux bornes de recharge en passant par ladite unité centrale. Ceci permet de concentrer toutes les fonctions complexes dans l'unité centrale, et d'avoir des bornes de recharge simples et peu chères, facilement duplicables.

Ladite unité centrale peut comporter un redresseur connecté en entrée à une source de courant alternatif, ladite source de recharge rapide pouvant être la sortie dudit redresseur, ce qui est un moyen simple et efficace de générer ladite source de recharge rapide à partir du réseau électrique alternatif.

Ladite unité centrale peut comporter un moyen de mesure du courant du premier bus, et chaque borne de recharge comporter un moyen de mesure de la tension disposé entre le premier bus et ledit moyen de branchement correspondant, ce qui permet une mesure fiable et précise de la consommation de puissance en recharge rapide de chaque borne de recharge.

Ladite unité centrale peut comporter un moyen de mesure de la tension du dispositif de connexion, et chaque borne de recharge comporter un moyen de mesure du courant disposé entre le dispositif de connexion et ledit moyen de branchement correspondant, ce qui permet une mesure fiable et précise de la consommation de puissance en recharge lente de chaque borne de recharge.

Ladite installation peut comporter :
- une première installation selon l'invention telle que définie ci-dessus,
- une deuxième installation selon l'invention telle que définie ci-dessus,
- au moins une unité de jonction comportant un premier interrupteur permettant de connecter entre eux au moins un desdits au moins un premier bus de ladite première installation et au moins un desdits au moins un premier bus de la deuxième installation, et un second interrupteur permettant de connecter entre eux au moins un desdits au moins un dispositif de connexion de ladite première installation et au moins un desdits au moins un dispositif de connexion de la deuxième installation, ce qui permet de disposer de sources de recharge redondantes pour chaque borne de recharge, et permet à ladite installation dont une borne de recharge a un isolement défectueux de continuer à fonctionner au niveau d'au moins une partie de ses autres bornes de recharge.

Ladite installation peut comporter un moyen de connexion bidirectionnel entre au moins une desdites au moins une source de recharge rapide et le premier bus, ce qui permet de transférer de l'énergie d'une batterie d'un véhicule vers le réseau électrique, pour des applications de véhicule-réseau ou « vehicle-to-grid ».

Ladite installation peut comporter au moins deux sources de recharge rapide en courant continu, ce qui permet une redondance des sources de recharge rapide, et de charger un véhicule plus rapidement en additionnant les puissances provenant de chaque source de recharge rapide.

Ledit moyen de commutation peut être un commutateur électromécanique, qui est un moyen particulièrement efficace et sûr d'assurer la commutation entre sources sans risquer qu'une source de recharge rapide et une source de recharge lente soient connectées en même temps à un véhicule.

Au moins une première desdites au moins deux bornes de recharge reliées à au moins une source de recharge rapide et au moins une source de recharge lente peut être reliée à au moins une desdites sources de recharge par un bus de connexion traversant au moins une deuxième desdites au moins deux bornes de recharge, ce qui permet une modularité importante de l'installation, l'ajout ou le retrait de bornes étant particulièrement simple.

Ladite invention concerne également un procédé de mise en service évolutive d'au moins une installation de recharge selon l'invention, comportant les étapes suivantes :
- mise en service d'une première installation de recharge selon l'invention,
- recharge de véhicules sur ladite première installation,
- ajout d'au moins une borne de recharge supplémentaire à ladite première installation afin d'obtenir une seconde installation selon l'invention, ladite borne de recharge étant connectée audit premier bus et audit dispositif de connexion de ladite première installation.

Ce procédé permet de faire évoluer une station de recharge existante en la faisant grandir en fonction des besoins, ceci à moindres coûts.

Ladite invention concerne également un procédé de mise en service évolutive d'au moins une installation de recharge selon l'invention, comportant les étapes suivantes :
- mise en service d'une première installation de recharge selon l'invention,
- recharge de véhicules sur ladite première installation,
- ajout d'au moins une borne de recharge supplémentaire à ladite première installation afin d'obtenir une deuxième installation selon l'invention, ladite borne de recharge étant connectée audit premier bus et audit dispositif de connexion de ladite première installation.
- mise en service d'une troisième installation de recharge selon l'une quelconque des revendications 1 à 8, au moins une desdites au moins une borne de recharge supplémentaire de ladite deuxième installation étant déconnectée dudit premier bus et dudit dispositif connexion de ladite deuxième installation, puis connectée au premier bus et au dispositif de connexion de ladite troisième installation.

Ce procédé permet de faire évoluer une station de recharge existante en la faisant grandir en fonction des besoins, ceci à moindres coûts.

### Brève description des dessins

La présente invention et ses avantages apparaîtront mieux dans la description suivante de plusieurs modes de réalisation donnés à titre d'exemples non limitatifs, en référence aux dessins annexés, dans lesquels :
[Fig 1] la fig. 1 est une vue schématique d'une installation selon un premier mode de réalisation de l'invention,
[Fig 2] la fig. 2 est une vue schématique d'une installation selon un deuxième mode de réalisation de l'invention,
[Fig 3] la fig. 3 est une vue schématique d'une installation selon un troisième mode de réalisation de l'invention,
[Fig 4] la fig. 4 est une vue schématique d'une installation selon un quatrième mode de réalisation de l'invention,
[Fig 5] la fig. 5 est une vue schématique d'une installation selon un cinquième mode de réalisation de l'invention,
[Fig 6] la fig. 6 est une vue schématique d'une installation selon un sixième mode de réalisation de l'invention.

### Description des modes de réalisation

Dans les exemples de réalisation illustrés, les éléments ou parties identiques portent les mêmes numéros de référence.

En référence aux figures, l'installation selon l'invention permet la recharge de véhicules électriques 1.

Dans le cadre de la présente invention, l'expression « véhicule électrique » désigne un véhicule dont la propulsion est assurée exclusivement ou non par un ou plusieurs moteurs électriques. Cette expression couvre donc aussi un véhicule hybride rechargeable, c'est-à-dire un véhicule qui comporte un ou plusieurs moteurs électriques aptes à assurer la propulsion du véhicule, et un ou plusieurs autres types de moteurs aptes à assurer la propulsion du véhicule, généralement thermiques.

Les véhicules électriques 1 concernés peuvent être de toute catégorie, notamment les véhicules terrestres tels que voitures, camions, camionnettes, motocyclettes, et également les véhicules aériens, maritimes ou fluviaux.

L'installation de recharge selon l'invention comporte au moins une source de recharge rapide 2, dont est issue un courant continu, et au moins une source de recharge lente 3, dont est issue un courant alternatif.

La puissance issue de la source de recharge rapide 2 est supérieure à la puissance issue de la source de recharge lente 3. La source de recharge rapide 2 fournit un courant continu d'une puissance qui peut être supérieure ou égale à 24 kW, par exemple 24 kW, 50 kW, 100 kW, 200 kW, ou encore 350 kW. La source de recharge lente 3 fournit un courant alternatif d'une puissance, par véhicule à recharger, qui peut être inférieure ou égale à 50 kW, par exemple 3,7 kW, 7,4 kW, 11 kW, 22 kW ou encore 43 kW. Les valeurs mentionnées sont données à titre indicatif et ne sont pas limitatives.

L'installation comporte une pluralité de bornes de recharge 4, chaque borne pouvant être utilisée pour y recharger un véhicule électrique 1.

Les bornes de recharge 4 sont de préférence intégrées dans des coffrets ayant les propriétés d'isolation et d'étanchéité requises pour l'installation. Les coffrets peuvent comporter un contrôleur permanent d'isolement (IMD), permettant de détecter un défaut d'isolement. Un coffret peut comporter une ou plusieurs bornes de recharge 4.

Au moins deux bornes de recharge 4 sont reliées à la source de recharge rapide 2 par un premier bus 5, et à la source de recharge lente 3 par un dispositif de connexion 6. Si l'installation comporte plusieurs sources de recharge rapide 2 ou plusieurs sources de recharge lente 3, elle comporte pour chaque source de recharge 2, 3 un bus 5 ou un dispositif de connexion 6 reliant cette source de recharge 2, 3 à au moins deux bornes de recharge 4.

Au sens de la présente invention, un « bus » est un moyen de connexion reliant une source de recharge rapide 2 ou lente 3 à un ensemble de bornes de recharge 4, comportant une partie principale linéaire unique, à laquelle sont connectées les bornes de recharge 4. Le bus alimente successivement les bornes de recharge 4, formant une topologie linéaire entre une première extrémité, qui est une source de recharge rapide 2, respectivement lente 3, et une deuxième extrémité, qui est soit une borne de recharge 4, soit une source de recharge rapide 2, respectivement lente 3. Entre ces deux extrémités, le bus passe à proximité ou traverse une ou plusieurs bornes de recharge 4 afin de les alimenter.

Dans le cas où le bus traverse une ou plusieurs bornes de recharge 4, les bornes de recharge 4 alimentées par ce bus peuvent être connectées au reste de l'installation, et notamment aux sources de recharge rapide 2 et/ou lente 3 en étant connectées uniquement à leurs bornes de recharges voisines. Les bornes de recharge 4 concernées comportent alors par exemple un connecteur d'entrée, et un connecteur de sortie, pour connexion à chacune de leurs deux bornes de recharge 4 voisines le long du bus, le bus passant par ces connecteurs d'entrée et de sortie. Cette disposition améliore la modularité et donc l'évolutivité de l'installation selon l'invention, à laquelle il est particulièrement aisé d'ajouter ou de retirer des bornes de recharge 4. L'installation comporte donc des bornes de recharge reliées à la source de recharge rapide 2 et à la source de recharge lente 3, et peut comporter en complément des bornes de recharge 4 reliées uniquement à la source de recharge rapide 2 et/ou des bornes de recharge 4 reliées uniquement à la source de recharge lente 3.

Le premier bus 5 forme un canal de puissance en courant continu. Il comporte un ou plusieurs câbles conducteurs comprenant chacun deux ou trois fils, les câbles ayant de préférence une section permettant d'adresser la puissance maximum issue de la source de recharge rapide 2 vers un véhicule 1 unique. En effet une recharge en courant continu vers une pluralité de véhicules 1 n'est possible que si leurs batteries sont toutes au même potentiel ; c'est pourquoi la recharge en provenance de la source de recharge rapide 2 se fait, dans la plupart des installations selon l'invention, vers un véhicule 1 unique.

Le dispositif de connexion 6 peut être un câblage classique, mais est de préférence un deuxième bus 6 formant un canal de puissance en courant alternatif. Il comporte un ou plusieurs câbles conducteurs en monophasé ou triphasé, avec ou sans fil neutre, les câbles ayant de préférence une section permettant d'adresser la puissance maximum issue de la source de recharge lente 3 vers l'ensemble des véhicules 1 connectés aux bornes de recharge 4 de l'installation.

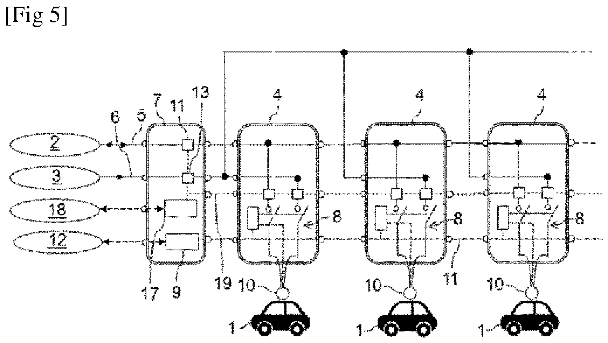

Le dispositif de connexion 6 peut alternativement avoir la forme d'une architecture en étoile, comme illustré en fig. 5.

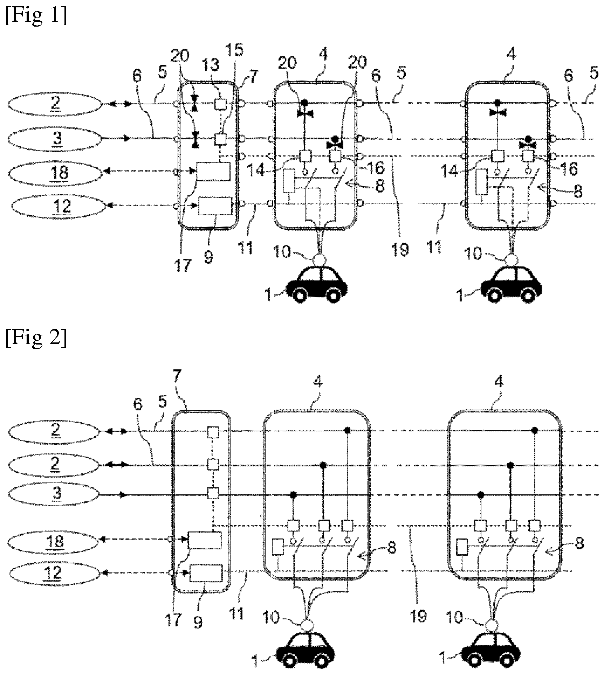

L'installation peut comporter une source unique de recharge rapide 2, comme illustré en fig. 1, ou plusieurs sources de recharge rapide 2, comme illustré en fig. 2. La pluralité de sources de recharge rapide 2 comporte plusieurs avantages. Cela permet tout d'abord de toujours être capable d'effectuer une recharge rapide simultanément vers un nombre de véhicules 1 égal au nombre de sources de recharge rapide 2. Cela permet également de disposer de redondance, en cas de défaut d'une des sources de recharge rapide 2.

L'installation comporte de préférence une unité centrale 7. Entre les sources de recharge 2, 3 et les bornes de recharge 4, le bus 5 et le dispositif de connexion 6 passent par l'unité centrale 7. L'unité centrale 7 peut comporter un contrôleur permanent d'isolement (IMD). L'IMD de l'unité centrale 7 permet de préférence contrôler l'isolement de chaque borne de recharge 4, et permet ainsi d'éviter de devoir disposer un IMD dans chaque borne de recharge 4, ce qui permet de réduire les coûts.

L'unité centrale 7 est de préférence intégrée dans un coffret ayant les propriétés d'isolation et d'étanchéité requises pour l'installation, et peut être sur le lieu de l'installation ou distante dans un local technique.

L'unité centrale 7 peut comporter un redresseur. Le redresseur, prenant en entrée une source de courant alternatif, est capable de générer un courant continu. La source de recharge rapide 2 peut être constituée d'un tel redresseur. Dans ce cas, la source de recharge rapide 2 est située dans l'unité centrale 7, sans contradiction avec le fait qu'entre la source de recharge rapide 2 et les bornes de recharge 4, le premier bus 5 passe par l'unité centrale 7. Le redresseur est de préférence un convertisseur AC/DC, qui offre plus de possibilités pour piloter le courant.

Les bornes de recharge 4 comportent chacune un moyen de commutation 8, piloté par un contrôleur 9. Si l'installation comporte une unité centrale, le contrôleur 9 peut être disposé dans l'unité centrale 7 et mutualisé. Sinon, le contrôleur 9 peut être formé par une pluralité d'entités de contrôle présentes dans les bornes de recharge 4. Dans ce cas, les bornes de recharge 4 comportent des moyens de communication leur permettant de communiquer entre elles. Le moyen de commutation 8 est relié en entrée à tous les premier bus 5 et dispositifs de connexion 6 de l'installation, et en sortie à un moyen de branchement 10 à un véhicule 1. Le moyen de commutation 8 est également relié au contrôleur 9 afin de recevoir ses ordres de pilotage, par un canal de communication qui peut être sans-fil, mais qui est de préférence filaire. Le moyen de commutation 8 peut être soit en état ouvert, dans lequel aucun bus 5 ou dispositif de connexion 6 n'est relié au connecteur de branchement 10, soit en état fermé, dans lequel soit un premier bus 5, soit plusieurs bus 5, soit un dispositif de connexion 6 unique, est relié au connecteur de branchement 10.

Le moyen de commutation 8 permet de préférence un inter verrouillage électrique et/ou mécanique afin de garantir un haut niveau de sécurité dans chaque borne de recharge 4, lors de la commutation entre une source de recharge rapide 2 et une source de recharge lente 3 en évitant la connexion simultanée des deux sources de recharge rapide 2 et lente 3 sur un véhicule 1.

Le moyen de commutation 8 est de préférence un commutateur électromécanique, qui est un moyen particulièrement efficace et sûr d'assurer la commutation entre sources sans risquer qu'une source de recharge rapide et une source de recharge lente soient connectées en même temps à un véhicule. Pour ce faire, un tel commutateur peut intégrer un inter-verrouillage mécanique, électrique, par exemple au moyen de contacts auxiliaires, ou encore un inter-verrouillage électronique, par exemple au moyen de capteurs de position du commutateur reliés à une carte électronique.

Alternativement, le moyen de commutation 8 peut être un commutateur statique, réalisant la fonction de commutation au moyen de semi-conducteurs. Ce type de commutateur peut également permettre une protection-ultra rapide en intégrant la fonction de disjoncteur statique. Enfin ce type de commutateur peut être piloté de manière partiellement saturée, permettant ainsi, à l'aide d'une unique source de courant continu, de recharger plusieurs véhicules 1 à la fois en charge rapide, par exemple selon un procédé décrit plus bas. Ce fonctionnement partiellement saturé peut être obtenu par exemple en modulant la différence de potentiel entre grille et source (ou tension VGS) d'un transistor à effet de champ à grille métal-oxyde (ou MOSFET), ou la tension de grille (ou tension VGE) d'un transistor bipolaire à grille isolée (ou IGBT). Il permet de réaliser une fonction d'équilibrage des tensions continues des batteries de plusieurs véhicules 1, et une fonction de contrôle du courant affecté à chaque véhicule 1 en charge ou en décharge sur le même bus DC.

Le moyen de commutation 8 peut encore être un commutateur mécanique, réalisant le passage de la source lente 3 à la source rapide 2, ou l'inverse, au moyen d'un mouvement mécanique initié par un actionneur. Ce type de commutateur peut également intégrer une fonctionnalité d'inter-verrouillage mécanique.

Le contrôleur 9 est relié à l'ensemble des moyens de commutation 8 de l'installation par l'intermédiaire d'un canal de communication de pilotage 11.

Lorsqu'un véhicule 1 est branché au moyen de branchement 10, ce véhicule 1 peut être rechargé soit en recharge rapide, c'est-à-dire par un courant en provenance de la source de recharge rapide 2, soit en recharge lente, c'est-à-dire par un courant en provenance de la source de recharge lente 3.

Le moyen de branchement 10 peut comporter deux connecteurs, chaque connecteur étant associé à un type de recharge lente ou rapide. Il faut alors connecteur les deux connecteurs sur le véhicule 1 pour pouvoir bénéficier de l'invention. De préférence, le moyen de branchement 10 comporte un connecteur unique, permettant la recharge lente et la recharge rapide, ce qui permet une connexion plus facile du véhicule 1 à la borne de recharge. Ce connecteur de branchement peut être un connecteur combinant les broches du connecteur CCS Combo 2, pouvant être utilisées pour la recharge rapide et les broches du connecteur CEI Type 2, pouvant être utilisées pour la recharge lente.

Grâce à l'invention, un véhicule 1 connecté à une borne de recharge 4 peut bénéficier soit d'une recharge rapide, soit d'une recharge lente, soit d'une recharge partiellement lente et partiellement rapide, les deux types de recharge ayant lieu à différents moments. Ainsi un utilisateur arrivant à une installation de recharge selon l'invention, peut se garer à n'importe quelle borne de recharge 4 quel que soit le type de recharge qu'il souhaite. Tout véhicule 1, compatible avec une recharge rapide en courant continu et une recharge lente en courant alternatif, ou uniquement compatible avec une recharge lente en courant alternatif, peut se recharger sur chacune des bornes de recharge 4 disponibles.

Pour optimiser au mieux les possibilités résultant de la flexibilité de l'installation selon l'invention, le contrôleur 9, qui contrôle les moyens de commutation 8, peut recevoir ses ordres d'un module de supervision 12 distant. Le contrôleur 9 et le module de supervision 12 communiquent par tout moyen connu, filaire ou sans-fil, par l'intermédiaire d'un réseau de communication ou non. Le module de supervision 12 gère les ressources de puissance issues des sources de recharge 2, 3 selon les demandes des différents véhicules 1 connectés aux bornes de recharge 4. Les niveaux de charge des batteries des véhicules 1 sont de préférence pris en compte par le module de supervision 12. Pour cette gestion, une des contraintes principales est que dans la plupart des cas, un seul véhicule 1 à la fois peut être chargé à partir d'une source de recharge rapide 2, alors que plusieurs véhicules 1 peuvent être simultanément chargés à partir d'une source de recharge lente 3.

Dans certains cas particuliers, il est possible de charger plusieurs véhicules 1 simultanément à partir d'une source de recharge rapide 2. Dans ce cas, il est nécessaire que le potentiel des batteries de chacun de ces véhicules 1 soit identique. Le procédé suivant peut alors être mis en œuvre :
- un premier véhicule 1 dont la batterie a la tension la plus basse commence à être chargé,
- lorsque la tension de la batterie du premier véhicule 1 est égale à la tension de la batterie d'un deuxième véhicule 1 ayant la deuxième tension la plus basse, le deuxième véhicule 1 commence à être chargé, en complément du premier véhicule 1,
- idem avec un troisième véhicule 1, etc.

Des niveaux de priorité peuvent être alloués à différents utilisateurs, selon le tarif qu'ils souhaitent payer ou selon des contraintes qu'ils peuvent communiquer au module de supervision 12. Par exemple l'utilisateur peut communiquer au système son niveau de charge souhaité en fin de recharge, et l'heure de son départ. Le module de supervision 12 donnera alors une priorité plus importante aux utilisateurs les plus pressés.

Si le contrôleur 9 est réparti dans les bornes de recharge 4, celles-ci sont aptes à communiquer entre elles pour déterminer ensemble la répartition des ressources disponibles, éventuellement en fonction des priorités de chacune.

Afin de mesurer la consommation d'énergie des véhicules 1 connectés aux bornes de recharge 4, l'unité centrale 7 peut comporter des moyens de mesure mutualisés pour l'ensemble de l'installation.

Pour mesurer la consommation liée à une recharge rapide d'un véhicule 1 connecté à une des bornes de recharge 4 par l'intermédiaire du premier bus 5, l'unité centrale 7 peut comporter un moyen de mesure du courant mutualisé 13 permettant de mesurer le courant parcourant le premier bus 5 au niveau de l'unité centrale 7. Chaque borne de recharge 4 peut comporter un moyen de mesure de la tension individuelle 14 permettant de mesurer la tension entre le premier bus 5 et le moyen de branchement 10 au niveau de la borne de recharge 4. Le moyen de mesure de la tension individuelle 14 est de préférence disposé entre le moyen de commutation 8 et le moyen de branchement 10, pour permettre de mesurer le plus précisément possible l'énergie effectivement envoyée au véhicule 1. Ainsi les chutes de tension au niveau de chaque borne de recharge 4 peuvent être prises en compte dans ces mesures. Les mesures combinées des moyens de mesure 13 et 14 permettent de mesurer la consommation instantanée en puissance de chaque borne de recharge 4, et la consommation d'énergie peut en être déduite.

Pour mesurer la consommation liée à une recharge lente d'un véhicule 1 connecté à une des bornes de recharge 4 par l'intermédiaire du dispositif de connexion 6, l'unité centrale 7 peut comporter un moyen de mesure de la tension mutualisée 15 permettant de mesurer la tension du courant parcourant le dispositif de connexion 6 au niveau de l'unité centrale 7. Chaque borne de recharge 4 peut comporter un moyen de mesure du courant individuel 16 permettant de mesurer le courant entre le dispositif de connexion 6 et le moyen de branchement 10 au niveau de la borne de recharge 4. Le moyen de mesure du courant individuel 16 est de préférence disposé entre le moyen de commutation 8 et le moyen de branchement 10, pour permettre de mesurer le plus précisément possible l'énergie effectivement envoyée au véhicule 1. Les mesures combinées des moyens de mesure 15 et 16 permettent de mesurer la consommation instantanée en puissance de chaque borne de recharge 4, et la consommation d'énergie peut en être déduite.

Cette mutualisation des moyens de mesure permet de diminuer le nombre de composants de l'installation, ce qui en facilite la maintenance, augmente sa fiabilité, et réduit son coût.

L'unité centrale 7 peut comporter un moyen d'émission 17 permettant d'envoyer les données de mesure des consommations vers un module de gestion des consommations 18 distant. Le moyen d'émission 17 est relié à l'ensemble des moyens de mesure 13, 14, 15, 16 par l'intermédiaire d'un canal de communication de mesures 19. Le moyen d'émission 17 peut être filaire ou sans-fil, et tout protocole de communication connu pourra être utilisé. La recharge d'un véhicule 1 connecté à une borne de recharge 4 pouvant être partiellement effectuée en recharge lente et partiellement en recharge rapide, les consommations correspondant aux deux types de charges peuvent être consolidées, les tarifs en termes de kWh pouvant différer selon le type de charge. Un affichage consolidé des consommations peut être disponible au niveau de la borne de recharge 4. Le module de gestion des consommations 18 peut également comporter des fonctions de facturation et de paiement.

L'installation peut comporter des protections 20, par exemple de type fusibles, disjoncteurs ou SCCB (disjoncteur à semi-conducteurs). Les protections 20 peuvent être disposées comme illustré en fig. 1, sur le premier bus 5 et le dispositif de connexion 6 au niveau de l'unité centrale 7, et au niveau de chaque borne de recharge 4 entre le premier bus 5, respectivement le dispositif de connexion 6, et le moyen de commutation 8.

Afin de simplifier l'installation, celle-ci peut comporter des protections 20 uniquement sur le premier bus 5 et le dispositif de connexion 6 au niveau de l'unité centrale 7, et pas de protection 20 spécifique dans les bornes de recharge 4. Dans ce cas, les protections 20 dans l'unité centrale 7 sont de préférence des protections réarmables, par exemple des disjoncteurs pilotables ou SCCB. En cas de besoin, le moyen de commutation 8 présent dans chaque borne de recharge 4 permettra d'isoler le segment de circuit sur lequel un défaut a été détecté.

Dans un mode de réalisation préféré de l'invention, le moyen de connexion entre au moins une des sources de recharge rapide 2 et le premier bus 5 est un moyen de connexion bidirectionnel. Ainsi les batteries des véhicules 1 connectés aux bornes de recharge 4 peuvent être utilisées comme éléments de stockage d'énergie permettant de réinjecter de l'énergie dans le réseau lorsque celui-ci en a besoin, notamment en fonction de sa charge. Par exemple lors d'un pic de consommation sur le réseau arrivant en soirée, il est possible de décharger en partie ou en totalité les batteries d'une flotte de véhicules 1 d'entreprises pour envoyer de l'énergie vers le réseau.

Ces véhicules n'étant pas utilisés avant le lendemain matin, ils auront le temps d'être rechargés pendant la nuit.

L'envoi d'énergie vers le réseau peut se faire soit à partir d'un véhicule 1 à la fois, soit à partir de plusieurs véhicules 1 simultanément. Dans ce dernier cas, il est nécessaire que le potentiel des batteries de chacun de ces véhicules 1 soit identique. Le procédé suivant peut alors être mis en œuvre :
- un premier véhicule 1 dont la batterie a la tension la plus élevée commence à envoyer de l'énergie vers le réseau,
- lorsque la tension de la batterie du premier véhicule 1 est égale à la tension de la batterie d'un deuxième véhicule 1 ayant la deuxième tension la plus élevée, le deuxième véhicule 1 commence à envoyer de l'énergie vers le réseau, en complément du premier véhicule,
- idem avec un troisième véhicule 1, etc.

L'envoi simultané d'énergie à partir de plusieurs véhicules 1 permet de distribuer la décharge sur plusieurs véhicules 1 tout en diminuant la fatigue des batteries due à des décharges trop rapides et intenses.

L'instant de connexion équipotentielle des batteries de deux véhicules 1 est critique. Si nécessaire, l'installation peut comporter dans les bornes de recharge 4 des protections 20 de type SCCB, afin de pouvoir réaliser un équilibrage fin, c'est-à-dire de piloter les semi-conducteurs des SCCB de manière linéaire sur quelques millivolts ou Volts, dans la limite de la dissipation thermique que ceux-ci peuvent accepter dans leur environnement.

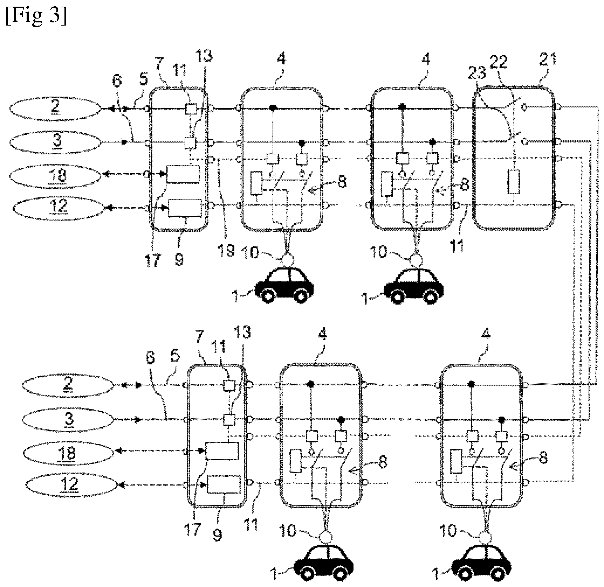

Une première installation et une deuxième installation selon l'invention peuvent être regroupées dans une troisième installation de type « boucle ». Un exemple d'une telle installation est illustré à la fig. 3. La troisième installation comporte une unité de jonction 21 permettant d'interconnecter la première installation et la deuxième installation. L'unité de jonction 21 comporte notamment un premier interrupteur 22, permettant de relier entre eux les premiers bus 5 de la première installation et de la deuxième installation, et un deuxième interrupteur 23, permettant de relier entre eux les dispositifs de connexion 6 de la première installation et de la deuxième installation. L'architecture en boucle offre plusieurs avantages.

En cas de source de recharge rapide 2 ou lente 3 défectueuse, le premier interrupteur 22, respectivement deuxième interrupteur 23 peut être fermé, afin de mutualiser les sources de recharge en état de fonctionnement pour l'ensemble de la troisième installation.

Si un seul véhicule 1 de la troisième installation doit être rechargé par une recharge rapide, le premier interrupteur 22 peut être fermé, ce qui permet de recharger le véhicule 1 avec la somme des puissances des sources de recharge rapide 2 de la première installation et de la deuxième installation. Par contre si au moins un véhicule 1 de la première installation et un véhicule 1 de la deuxième installation doivent être rechargés simultanément par une recharge rapide, le premier interrupteur est mis en position ouverte, afin que chaque véhicule 1 puisse être rechargé par les sources de charges rapide 2 de la première installation, respectivement de la deuxième installation.

Un autre avantage de l'architecture en boucle est que si une borne de recharge 4 est défectueuse au niveau de la recharge rapide, respectivement de la recharge lente si le dispositif de connexion 6 est un second bus 6, notamment à cause d'un défaut d'isolement, et si l'installation comporte une pluralité d'unités de jonction 21, il est possible d'ouvrir le premier interrupteur 22, respectivement deuxième interrupteur 23, des boîtes de jonction l'entourant, et d'isoler la borne de recharge 4 en question..

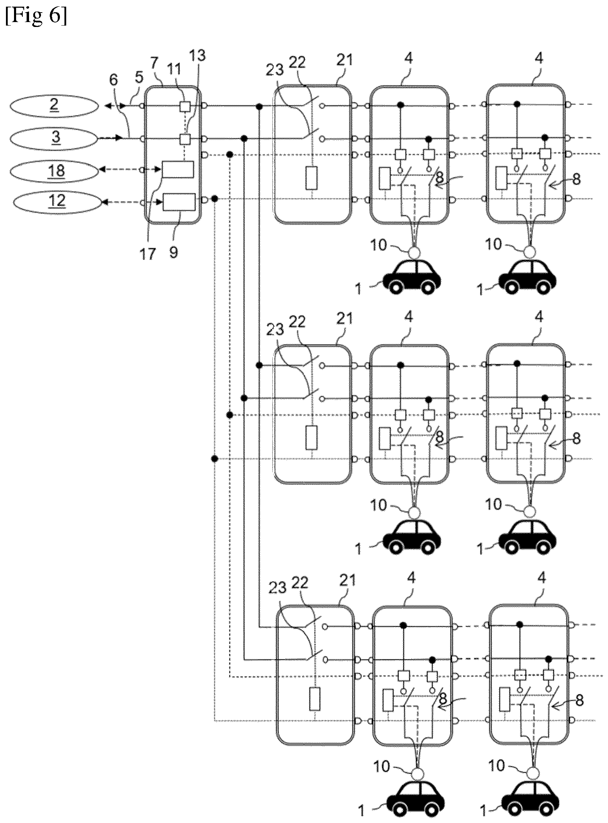

Une pluralité d'unités de jonction 21 peuvent aussi être utilisées pour une installation comportant une pluralité de premiers bus 5, et/ou de second bus 6 en parallèle, comme illustré par exemple en fig. 6. Sur cette figure, chaque unité de jonction 21 est présente entre les sources de recharge rapide 2 et lente 3 et un premier bus 5 et un deuxième bus 6 desservant une pluralité de bornes de recharge 4. Ce type d'installation permet d'alimenter un réseau de bornes de recharge 4, avec des bus 5, 6 que l'on peut isoler du reste de l'installation en cas de défaut sur un de ces bus et/ou une de ces bornes.

L'installation selon l'invention présente l'avantage d'être évolutive. Après la mise en service d'une telle installation, il est aisé de l'agrandir en ajoutant des bornes de recharge 4 connectées sur le premier bus 5 et le dispositif de connexion 6, spécialement si le dispositif de connexion est un second bus 6. Cet agrandissement est possible à des coûts réduits, l'essentiel des coûts de l'installation étant liés à la mise en place des sources de recharge 2, 3 et de l'unité centrale 7.

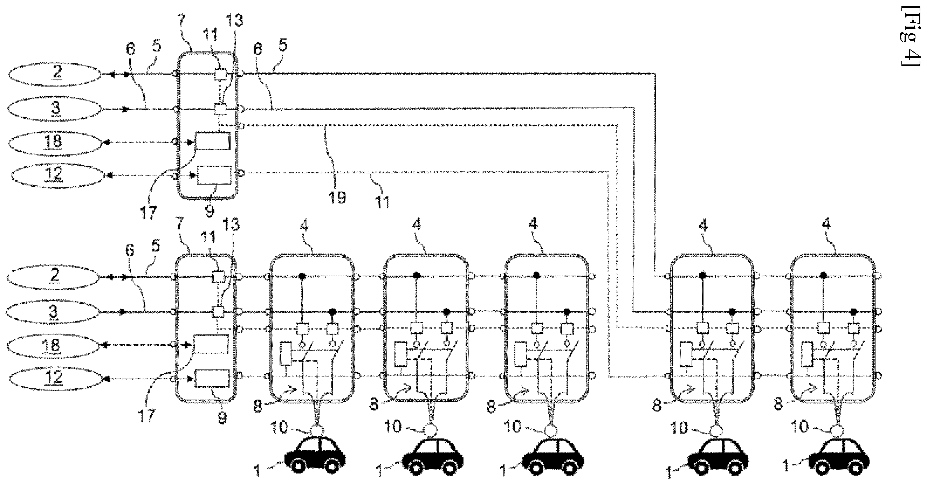

De façon avantageuse, si après ajout d'une ou plusieurs bornes de recharge 4 à une installation il est constaté que l'unité centrale 7 et les sources de recharge 2, 3 de l'installation initiale n'ont pas la capacité requise pour ajouter d'autres bornes de recharge 4, ou si l'on souhaite augmenter la puissance disponible pour les véhicules 1, il est possible de faire évoluer l'installation en la scindant en deux installations, et en reconnectant une partie de ses bornes de recharge 4 vers un premier bus 5 et un dispositif de connexion 6 d'une nouvelle installation. Une telle évolution est particulièrement aisée si le dispositif de connexion 6 est un second bus 6. Un exemple d'une telle évolution est illustré en fig. 4. Sur cet exemple, les trois bornes de recharge 4 situées le plus à gauche étaient initialement connectées à l'unité centrale 7 et aux sources de recharge 2, 3 situées en bas. Une quatrième borne de recharge 4 a été ajoutée à l'installation initiale. Finalement lorsqu'une cinquième borne de recharge 4 a été ajoutée à l'installation initiale, il a été décidé de créer une deuxième installation, à partir des sources de recharge 2, 3 et de l'unité centrale 7 situées en haut, de connecter la cinquième borne de recharge 4 sur la deuxième installation, et de reconnecter la quatrième borne de recharge 4 sur la deuxième installation afin d'équilibrer les charges.

La présente invention n'est bien entendu pas limitée aux exemples de réalisation décrits mais s'étend à toute modification et variante pour autant qu'elle reste dans le cadre des revendications annexées.

## Revendications

1. Installation de recharge pour véhicules (1) électriques,
comportant :
- au moins une source de recharge rapide (2) en courant continu,
- au moins une source de recharge lente (3) en courant alternatif,
- au moins un contrôleur (9),
- une pluralité de bornes de recharge (4),
- au moins un premier bus de connexion (5) reliant au moins une desdites au moins une source de recharge rapide (2) à au moins deux bornes de recharge (4), le premier bus de connexion (5) alimentant successivement lesdites au moins deux bornes de recharge (4), formant une topologie linéaire entre une première extrémité, qui est une source de recharge rapide (2), et une deuxième extrémité, qui est soit une borne de recharge (4), soit une source de recharge rapide (2),
- au moins un dispositif de connexion (6) reliant au moins une desdites au moins une source de recharge lente (3) auxdites au moins deux bornes de recharge (4),
chaque borne de recharge (4) comportant un moyen de commutation (8) piloté par ledit contrôleur (9), les entrées dudit moyen de commutation (8) étant reliées audit au moins un premier bus (5) et audit au moins un dispositif de connexion (6), et la sortie du moyen de commutation (8) étant reliée à un moyen de branchement (10) à un véhicule (1).

2. Installation de recharge selon la revendication 1, **caractérisée en ce que** ledit dispositif de connexion (6) est un second bus de connexion, le second bus de connexion alimentant successivement lesdites au moins deux bornes de recharge (4), formant une topologie linéaire entre une première extrémité, qui est une source de recharge lente (3), et une deuxième extrémité, qui est soit une borne de recharge (4), soit une source de recharge lente (3).

3. Installation de recharge selon l'une quelconque des revendications 1 à 2, **caractérisée en ce que** ledit moyen de branchement (10) est un connecteur unique de branchement à un véhicule (1).

4. Installation de recharge selon l'une quelconque des revendications 1 à 3, **caractérisée en ce que** ledit contrôleur (9) est disposé dans une unité centrale (7), ledit au moins un premier bus de connexion (5) reliant chaque source de recharge rapide (2) à au moins deux bornes de recharge (4) en passant par ladite unité centrale (7), et ledit au moins un dispositif de connexion (6) reliant chaque source de recharge lente (3) auxdites au moins deux bornes de recharge (4) en passant par ladite unité centrale (7).

5. Installation de recharge selon la revendication 4, **caractérisée en ce que** ladite unité centrale (7) comporte un redresseur connecté en entrée à une source de courant alternatif, ladite source de recharge rapide (2) étant la sortie dudit redresseur.

6. Installation de recharge selon l'une quelconque des revendications 4 à 5, **caractérisée en ce que** ladite unité centrale (7) comporte un moyen de mesure du courant (13) du premier bus (5), et chaque borne de recharge (4) comporte un moyen de mesure de la tension (14) disposé entre le premier bus (5) et ledit moyen de branchement (10) correspondant.

7. Installation de recharge selon l'une quelconque des revendications 4 à 6, **caractérisée en ce que** ladite unité centrale (7) comporte un moyen de mesure de la tension (15) du dispositif de connexion (6), et chaque borne de recharge (4) comporte un moyen de mesure du courant (16) disposé entre le dispositif de connexion (6) et ledit moyen de branchement (10) correspondant.

8. Installation de recharge selon l'une quelconque des revendications 1 à 7, **caractérisée en ce que** ladite installation comporte :
- une première installation selon l'une quelconque des revendications 1 à 5,
- une deuxième installation selon l'une quelconque des revendications 1 à 5,
- au moins une unité de jonction (21) comportant un premier interrupteur (22) permettant de connecter entre eux au moins un desdits au moins un premier bus (5) de ladite première installation et au moins un desdits au moins un premier bus (5) de la deuxième installation, et un second interrupteur (23) permettant de connecter entre eux au moins un desdits au moins un dispositif de connexion (6) de ladite première installation et au moins un desdits au moins un dispositif de connexion (6) de la deuxième installation.

9. Installation de recharge selon l'une quelconque des revendications 1 à 8, **caractérisée en ce qu'**elle comporte un moyen de connexion bidirectionnel entre au moins une desdites au moins une source de recharge rapide (2) et le premier bus (5).

10. Installation de recharge selon l'une quelconque des revendications 1 à 9, **caractérisée en ce que** ladite installation comporte au moins deux sources de recharge rapide (2) en courant continu.

11. Installation de recharge selon l'une quelconque des revendications 1 à 10, **caractérisée en ce que** ledit moyen de commutation (8) est un commutateur électromécanique.

12. Installation de recharge selon l'une quelconque des revendications 1 à 11, **caractérisée en ce qu'**au moins une première desdites au moins deux bornes de recharge (4) reliées à au moins une source de recharge rapide (2) et au moins une source de recharge lente (3) est reliée à au moins une desdites sources de recharge (2, 3) par un bus de connexion (5, 6) traversant au moins une deuxième desdites au moins deux bornes de recharge (4).

13. Procédé de mise en service évolutive d'au moins une installation de recharge selon l'une quelconque des revendications 1 à 12, comportant les étapes suivantes :
- mise en service d'une première installation de recharge selon l'une quelconque des revendications 1 à 12,
- recharge de véhicules (1) sur ladite première installation,
- ajout d'au moins une borne de recharge (4) supplémentaire à ladite première installation afin d'obtenir une deuxième installation selon l'une quelconque des revendications 1 à 12, ladite borne de recharge étant connectée audit premier bus (5) et audit dispositif de connexion (6) de ladite première installation.

14. Procédé de mise en service évolutive d'au moins une installation de recharge selon la revendication 13, comportant les étapes suivantes :
- mise en service d'une première installation de recharge selon l'une quelconque des revendications 1 à 12,
- recharge de véhicules (1) sur ladite première installation,
- ajout d'au moins une borne de recharge (4) supplémentaire à ladite première installation afin d'obtenir une deuxième installation selon l'une quelconque des revendications 1 à 12, ladite borne de recharge étant connectée audit premier bus (5) et audit dispositif de connexion (6) de ladite première installation.
- mise en service d'une troisième installation de recharge selon l'une quelconque des revendications 1 à 12, au moins une desdites au moins une borne de recharge (4) supplémentaire de ladite deuxième installation étant déconnectée dudit premier bus (5) et dudit dispositif connexion (6) de ladite deuxième installation, puis connectée au premier bus (5) et au dispositif de connexion (6) de ladite troisième installation.

## Patentansprüche

1. Ladeanlage für Elektrofahrzeuge (1), bestehend aus:
- mindestens einer Schnellladequelle (2) für Gleichstrom,
- mindestens einer Langsamladequelle (3) für Wechselstrom,
- mindestens einer Steuereinheit (9),
- einer Vielzahl von Ladestationen (4),
- mindestens einem ersten Verbindungsbus (5), der mindestens eine der mindestens einen Schnellladequelle (2) mit mindestens zwei Ladestationen (4) verbindet, wobei der erste Verbindungsbus (5) den mindestens zwei Ladestationen (4) nacheinander Strom zuführt, die eine lineare Topologie zwischen einem ersten Ende, einer Schnellladequelle (2), und einem zweiten Ende, entweder einer Ladestation (4) oder einer Schnellladequelle (2), bilden;
- mindestens einer Verbindungsvorrichtung (6), die mindestens eine der mindestens einen Langsamladequelle (3) mit den mindestens zwei Ladestationen (4) verbindet;
wobei jede Ladestation (4) eine von der Steuereinheit (9) gesteuerte Schalteinrichtung (8) umfasst, wobei die Eingänge der Schalteinrichtung (8) mit dem mindestens einen ersten Bus (5) und der mindestens einen Verbindungsvorrichtung (6) verbunden sind und der Ausgang der Schalteinrichtung (8) mit einem Anschlussmittel (10) an ein Fahrzeug (1) verbunden ist.

2. Ladeanlage nach Anspruch 1, **dadurch gekennzeichnet, dass** es sich bei der Verbindungsvorrichtung (6) um einen zweiten Verbindungsbus handelt, wobei der zweite Verbindungsbus den mindestens zwei Ladestationen (4) nacheinander Strom zuführt, die eine lineare Topologie zwischen einem ersten Ende, einer Langsamladequelle (3), und einem zweiten Ende, entweder einer Ladestation (4) oder einer Langsamladequelle (3), bilden.

3. Ladeanlage nach einem der Ansprüche 1 bis 2, **dadurch gekennzeichnet, dass** das Anschlussmittel (10) aus einem einzigen Stecker zum Anschluss an ein Fahrzeug (1) besteht.

4. Ladeanlage nach einem der Ansprüche 1 bis 3, **dadurch gekennzeichnet, dass** die Steuereinheit (9) in einer Zentraleinheit (7) angeordnet ist, wobei der mindestens eine erste Verbindungsbus (5) jede Schnellladequelle (2) über die Zentraleinheit (7) mit mindestens zwei Ladestationen (4) verbindet, und die mindestens eine Verbindungsvorrichtung (6) jede Langsamladequelle (3) über die Zentraleinheit (7) mit den mindestens zwei Ladestationen (4) verbindet.

5. Ladeanlage nach Anspruch 4, **dadurch gekennzeichnet, dass** die Zentraleinheit (7) einen Gleichrichter umfasst, der eingangsseitig an eine Wechselstromquelle angeschlossen ist, wobei die Schnellladequelle (2) der Ausgang des Gleichrichters ist.

6. Ladeanlage nach einem der Ansprüche 4 bis 5, **dadurch gekennzeichnet, dass** die Zentraleinheit (7) ein Strommessgerät (13) für den ersten Bus (5) umfasst und jede Ladestation (4) ein Spannungsmessgerät (14) umfasst, das zwischen dem ersten Bus (5) und dem entsprechenden Anschlussmittel (10) angeordnet ist.

7. Ladeanlage nach einem der Ansprüche 4 bis 6, **dadurch gekennzeichnet, dass** die Zentraleinheit (7) ein Spannungsmessgerät (15) für die Verbindungsvorrichtung (6) umfasst, und jede Ladestation (4) ein Strommessgerät (16) aufweist, das zwischen der Verbindungsvorrichtung (6) und dem entsprechenden Anschlussmittel (10) angeordnet ist.

8. Ladeanlage nach einem der Ansprüche 1 bis 7, **dadurch gekennzeichnet, dass** die Anlage Folgendes umfasst:
- eine erste Anlage nach einem der Ansprüche 1 bis 5,
- eine zweite Anlage nach einem der Ansprüche 1 bis 5,
- mindestens ein Verbindungsteil (21) mit einem ersten Schalter (22),
wodurch mindestens einer der mindestens einen ersten Busse (5) der ersten Anlage mit mindestens einem der mindestens einen ersten Busse (5) der zweiten Anlage verbunden werden kann, und einen zweiten Schalter (23), der es ermöglicht, mindestens eine der mindestens einen Verbindungsvorrichtung (6) der ersten Anlage mit mindestens einer der mindestens einen Verbindungsvorrichtung (6) der zweiten Anlage zu verbinden.

9. Ladeanlage nach einem der Ansprüche 1 bis 8, durch gekennzeichnet, dass sie ein bidirektionales Anschlussmittel zwischen mindestens einer der mindestens einen Schnellladequelle (2) und dem ersten Bus (5) umfasst.

10. Ladeanlage nach einem der Ansprüche 1 bis 9, **dadurch gekennzeichnet, dass** die Anlage mindestens zwei Schnellladequellen (2) für Gleichstrom umfasst.

11. Ladeanlage nach einem der Ansprüche 1 bis 10, **dadurch gekennzeichnet, dass** die Schalteinrichtung (8) ein elektromechanischer Schalter ist.

12. Ladeanlage nach einem der Ansprüche 1 bis 11, **dadurch gekennzeichnet, dass** mindestens eine erste der mindestens zwei Ladestationen (4), die mit mindestens einer Schnellladequelle (2) und mindestens einer Langsamladequelle (3) verbunden sind, über einen Verbindungsbus (5, 6), der durch mindestens eine zweite der mindestens zwei Ladestationen (2, 3) verläuft, mit mindestens einer der Ladestationen (4) verbunden ist.

13. Verfahren zur erweiterbaren Inbetriebnahme mindestens einer Ladeanlage nach einem der Ansprüche 1 bis 12, das folgende Schritte umfasst:
- Inbetriebnahme einer ersten Ladeanlage nach einem der Ansprüche 1 bis 12,
- Aufladen von Fahrzeugen (1) an der ersten Anlage,
- Hinzufügen mindestens einer zusätzlichen Ladestation (4) zu der ersten Anlage, um eine zweite Anlage nach einem der Ansprüche 1 bis 12 zu erhalten, wobei die Ladestation mit dem ersten Bus (5) und der Verbindungsvorrichtung (6) der ersten Anlage verbunden ist.

14. Verfahren zur erweiterbaren Inbetriebnahme mindestens einer Ladeanlage nach Anspruch 13, das folgende Schritte umfasst:
- Inbetriebnahme einer ersten Ladeanlage nach einem der Ansprüche 1 bis 12,
- Aufladen von Fahrzeugen (1) an der ersten Anlage,
- Hinzufügen mindestens einer zusätzlichen Ladestation (4) zu der ersten Anlage, um eine zweite Anlage nach einem der Ansprüche 1 bis 12 zu erhalten, wobei die Ladestation mit dem genannten ersten Bus (5) und der Verbindungsvorrichtung (6) der ersten Anlage verbunden ist.
- Inbetriebnahme einer dritten Ladeanlage nach einem der Ansprüche 1 bis 12, wobei mindestens eine der mindestens einen zusätzlichen Ladestation (4) der zweiten Anlage vom ersten Bus (5) und von der Verbindungsvorrichtung (6) der zweiten Anlage getrennt ist und anschließend mit dem ersten Bus (5) und der Verbindungsvorrichtung (6) der dritten Anlage verbunden wird.

## Claims

1. Charging facility for electric vehicles (1), comprising:
at least one DC fast-charging source (2),
at least one AC slow-charging source (3),
at least one controller (9),
a plurality of charging stations (4),
at least one first connection bus (5) connecting at least one of said at least one fast-charging source (2) to at least two charging stations (4), the first connection bus (5) successively feeding said at least two charging stations (4), forming a linear topology between a first end, which is a fast-charging source (2), and a second end, which is either a charging station (4) or a fast-charging source (2),
at least one connection device (6) connecting at least one of said at least one slow charging source (3) to said at least two charging stations (4),
each charging station (4) comprising a switching means (8) controlled by said controller (9), the inputs of said switching means (8) being connected to said at least one first bus (5) and to said at least one connection device (6), and the output of the switching means (8) being connected to a means (10) for connecting to a vehicle (1).

2. Charging facility according to claim 1, **characterised in that** said connection device (6) is a second connection bus, the second connection bus successively feeding said at least two charging stations (4), forming a linear topology between a first end, which is a slow-charging source (3), and a second end, which is either a charging terminal (4) or a slow-charging source (3).

3. Charging facility according to any one of claims 1 to 2, **characterised in that** said connection means (10) is a single connector for connection to a vehicle (1).

4. Charging facility according to any one of claims 1 to 3, **characterised in that** said controller (9) is arranged in a central unit (7), said at least one first connection bus (5) connecting each fast-charging source (2) to at least two charging stations (4) via said central unit (7), and said at least one connection device (6) connecting each slow-charging source (3) to said at least two charging stations (4) via said central unit (7).

5. Charging facility according to claim 4, **characterised in that** said central unit (7) comprises a rectifier connected in input to an AC source, said fast-charging source (2) being the output of said rectifier.

6. Charging facility according to any one of claims 4 to 5, **characterised in that** said central unit (7) comprises a means (13) for measuring the current of the first bus (5), and each charging station (4) comprises a means (14) for measuring the voltage arranged between the first bus (5) and said corresponding connection means (10).

7. Charging facility according to any one of claims 4 to 6, **characterized in that** said central unit (7) comprises a means for measuring the voltage (15) of the connection device (6), and each charging terminal (4) comprises a means for measuring the current (16) arranged between the connection device (6) and said corresponding connection means (10).

8. Charging facility according to any one of claims 1 to 7, **characterised in that** said facility comprises:
a first facility according to any one of claims 1 to 5,
a second facility according to any one of claims 1 to 5,
at least one junction unit (21) comprising a first switch (22) for connecting together at least one of said at least one first bus (5) of said first facility and at least one of said at least one first bus (5) of the second facility, and a second switch (23) for connecting together at least one of said at least one connection device (6) of said first facility and at least one of said at least one connection device (6) of the second facility.

9. Charging facility according to any one of claims 1 to 8, **characterised in that** it comprises a bidirectional connection means between at least one of said at least one fast-charging source (2) and the first bus (5).

10. Charging facility according to any one of claims 1 to 9, **characterised in that** said facility includes at least two DC fast-charging sources (2).

11. Charging facility according to any one of claims 1 to 10, **characterised in that** said switching means (8) is an electromechanical switch.

12. Charging facility according to any one of claims 1 to 11, **characterised in that** at least one first of said at least two charging stations (4) connected to at least one fast-charging source (2) and at least one slow-charging source (3) is connected to at least one of said charging sources (2, 3) by a connection bus (5, 6) passing through at least one second of said at least two charging stations (4).

13. Method for the evolving commissioning of at least one charging facility according to any one of claims 1 to 12, comprising the following steps:
commissioning a first charging facility according to any one of claims 1 to 12,
charging vehicles (1) at said first facility,
adding at least one additional charging station (4) to said first facility in order to obtain a second facility according to any one of claims 1 to 12, said charging station being connected to said first bus (5) and to said connection device (6) of said first facility.

14. Method for the evolving commissioning of at least one charging facility according to claim 13, comprising the following steps:
commissioning a first charging facility according to any one of claims 1 to 12,
charging vehicles (1) at said first facility,
adding at least one additional charging station (4) to said first facility in order to obtain a second facility according to any one of claims 1 to 12, said charging station being connected to said first bus (5) and to said connection device (6) of said first facility.
commissioning a third charging installation according to any one of claims 1 to 12, at least one of said at least one additional charging station (4) of said second facility being disconnected from said first bus (5) and said connection device (6) of said second facility, and then connected to the first bus (5) and to the connection device (6) of said third facility.
